# EUROPÄISCHE PATENTSCHRIFT

(11) **EP 3 568 322 B1**
(45) Veröffentlichungstag und Bekanntmachung des Hinweises auf die Patenterteilung: **27.10.2021**
(21) Anmeldenummer: 17822615.5
(22) Anmeldetag: 13.12.2017
(51) Int. Cl.: B60R 16/023, H04L 29/08

(54) **ZENTRALE DATENABLAGE IM BORDNETZ**
CENTRAL DATA STORE IN VEHICLE ELECTRICAL SYSTEM
STOCKAGE DE DONNÉES CENTRAL DANS UN RÉSEAU DE BORD

(30) Priorität: 10.01.2017 DE 102017200263
(43) Veröffentlichungstag der Anmeldung: 20.11.2019
(73) Patentinhaber: Bayerische Motoren Werke Aktiengesellschaft, 80809 München (DE)
(72) Erfinder: SCHMUTZLER, Christoph, 80939 München (DE); KERN, Andreas, 91154 Roth (DE); KÖNIGSEDER, Thomas, 85457 Wilfling (DE)
(86) Internationale Anmeldenummer: PCT/EP2017/082599
(87) Internationale Veröffentlichungsnummer: WO 2018/130363

(56) Entgegenhaltungen:
- DE-A1-102012 208 205
- DE-A1-102012 216 012
- US-B1- 8 930 330

## Beschreibung

Die vorliegende Erfindung betrifft eine zentrale Datenablage in zumindest einem Gateway-Steuergerät im Bordnetz.

Gateway-Steuergeräte in Fahrzeugen sind bekannt. Solche Gateway-Steuergeräte agieren als transparenter Tunnel, der Daten zwischen verschiedenen Bussystemen bzw. Busanschlüssen (z.B. FlexRay (FR, Controller Area Network (CAN), Local Interconnect Network (LIN) und Ethernet) im Fahrzeug austauscht. In aktuellen Fahrzeugen kommen regelmäßig zwei oder mehr vorgenannten Bussysteme zum Einsatz, die über Gateways vernetzt werden.

Die Konfiguration von Bordnetzen ― d.h. die Gesamtheit aller elektrischen Komponenten im jeweiligen Fahrzeug (z.B. Steuergeräte, Sensoren, Verkabelungen, Bussysteme, Energiespeicher (Akkumulatoren, Batterien), Generatoren, Bordspannungssteckdosen, Anzeigeelemente (z.B. Warn- und Kontrollleuchten), etc.) findet üblicherweise zur Entwicklungszeit bzw. Systemdesignzeit des Fahrzeugs statt. Dies beinhaltet auch die statische Zuordnung jedes Steuergerätes bzw. Kommunikationsteilnehmers zu einem vordefinierten Bussystem und somit auch zu einer Zuordnung von auf jedem definierten Bus eingehenden Nachrichten. Dabei findet auch eine genaue Zuordnung der Nachrichtenstruktur statt.

Nachteilig daran ist, dass eine Modifikation der Bordnetzkonfiguration für ein bestimmtes Fahrzeug nachträglich mit erheblichem Mehraufwand verbunden ist. So kann z.B. keine Änderung einer Zuordnung eines Steuergeräts oder anderer Kommunikationsteilnehmer erfolgen. Ein weiterer Nachteil heutiger Gateways liegt darin, dass diese nicht auf Nutzdaten der jeweiligen Nachrichten (im Folgenden auch Informationen genannt) aktiv zugreifen oder diese verarbeiten können. Somit sind Änderungen der zu versendeten Nutzdaten in einzelnen Steuergeräten bzw. eine Integration neuer Steuergeräte bzw. Kommunikationsteilnehmer im Bordnetz nur mit erheblichem Aufwand möglich. Aufgrund dessen müssen im Zuge von Weiterentwicklungen auch nur eines einzelnen Kommunikationsteilnehmers im Bordnetz immer alle Nachrichtenempfänger entsprechend mühsam angepasst werden.

Die DE 10 2012 208 205 A1 beschreibt ein Verfahren zum Aufzeichnen von Daten bzw. zum Senden von Stimulations-Daten, welche in Ethernet-basierten Netzwerken von Fahrzeugen übertragen werden. Es wird insbesondere ein Verfahren zum Aufzeichnen von Daten beschrieben, wobei die Daten von einem sendenden Steuergerät an ein empfangendes Steuergerät eines Fahrzeugs über ein Kommunikationssystem des Fahrzeugs gesendet werden. Das Kommunikationssystem umfasst ein Ethernet-Netzwerk, wobei die Daten von einer Sende-Komponente an eine Empfangs-Komponente des Ethernet-Netzwerks über einen Übertragungspfad geleitet werden, und wobei die Daten an einer Logging-Komponente des Ethernet-Netzwerks, die nicht auf dem Übertragungspfad liegt, aufgezeichnet werden.

Die DE 10 2012 216 012 A1 beschreibt eine Datenaufzeichenvorrichtung zum Aufzeichnen von Kommunikationsdaten eines Fahrzeugnetzwerks, umfassend einen ersten Eingang zum Empfangen erster Kommunikationsdaten aus einem ersten Punkt des Fahrzeugnetzwerks und einen zweiten Eingang zum Empfangen zweiter Kommunikationsdaten aus einem zweiten Punkt des Fahrzeugnetzwerks. Die Datenaufzeichenvorrichtung ist dazu ausgeführt, die ersten Kommunikationsdaten mit einem ersten Zeitstempel und die zweiten Kommunikationsdaten mit einem zweiten Zeitstempel zu versehen, wobei der erste Zeitstempel und der zweite Zeitstempel miteinander synchronisiert sind.

Die US 8 930 330 B1 beschreibt eine Validierung von Protokollformaten. Protokolldaten werden über einen Protokollierungsdienst in einem Datenspeicher oder einem anderen Speichersystem gespeichert.

Die Aufgabe der Erfindung besteht darin, die eine Lösung zu schaffen, welche die oben genannten Nachteile vermeidet und somit eine dynamische Bordnetzkonfiguration ermöglicht.

Diese Aufgabe wird erfindungsgemäß durch die Merkmale der unabhängigen Ansprüche gelöst. Bevorzugte Ausführungsformen sind Gegenstand der abhängigen Ansprüche.

Gemäß einem ersten Aspekt der Erfindung wird ein zentrales Gateway-Steuergerät zum Management von Daten, die über ein Bordnetz in einem Fahrzeug übertragen werden, bereitgestellt. Das Gateway-Steuergerät umfasst zumindest einen zentralen Kommunikationsserver, ZKS, bzw. eine zentrale Kommunikationsserverinstanz umfassend:
- zumindest eine zentrale Informationsablage, ZIA, zur zentralen Ablage von Daten, die über das Bordnetz übertragen werden;
- zumindest ein Kommunikationsmodul zur Datenübertragung zwischen der ZIA und zumindest einem zum Bordnetz gehörigen Bussystem;
wobei das Gateway-Steuergerät die über das Kommunikationsmodul übertragenen und in ein einheitliches Datenformat umgewandelten Daten in der ZIA ablegt, und wobei auf die in der ZIA im einheitlichen Datenformat abgelegten Daten sowie in diesen vorhandenen Nutzdaten aktiv zugegriffen werden kann und/oder die in den Daten vorhandenen Nutzdaten verarbeiten werden können.

Das zentrale Gateway-Steuergerät kann ein Steuergerät sein, welches zumindest eine ZKS-Instanz umfasst. Die ZKS-Instanz ist ein Software-Modul, welches die ZIA sowie zumindest ein Kommunikationsmodul zur Datenübertragung zwischen der ZIA und zumindest einem zum Bordnetz gehörigen Bussystem umfasst. Die ZIA ist somit ein Speicherbereich, in welchem Daten bzw. Informationen, die über das Bordnetz in einem Fahrzeug übertragen werden, in einem einheitlichen Format abgelegt werden können. Das zumindest eine Kommunikationsmodul kann dabei lesend bzw. schreibend auf die ZIA zugreifen. Dies kann über entsprechend definierte ZIA-Schnittstellen bzw. ZIA-APIs erfolgen.

Vorteilhafter weise dient das Gateway-Steuergerät somit nicht lediglich zum Routen von Nachrichten zwischen verschiedenen (Nachrichten-) Producern bzw. Erzeugern und (Nachrichten-) Consumern bzw. Verbrauchern im Bordnetz sondern ist erstmals in der Lage, die auszutauschenden Daten in der ZIA in einem einheitlichen Format zu hinterlegen. Bei den Producern handelt es sich um Komponenten bzw. Kommunikationsteilnehmer im Bordnetz (z.B. Steuergeräte, Sensoren, Anzeigeelemente, etc.), die bestimmte Datensätze generieren und bei Consumern um Komponenten bzw. Kommunikationsteilnehmer im Bordnetz, die zumindest Nutzdaten bestimmter Datensätze konsumieren.

Da die Daten in der ZIA im einheitlichen Datenformat hinterlegt werden, kann z.B. über ein in der ZKS-Instanz realisiertes (Teil-) Softwaremodul auf die in der ZIA hinterlegten Nutzdaten zugegriffen werden. Darüber hinaus können aufgrund der einheitlichen Datensatzstruktur die hinterlegten Daten entsprechend verarbeitet werden.

Vorzugsweise umfassen die in der ZIA abgelegten Daten:
- eine eindeutige Identifikation, ID;
- einen Zeitstempel;
- eine Version; und/oder
- Nutzdaten bzw. Informationen.

Bei der eindeutigen ID handelt es sich um eine fahrzeugweit eindeutige Identifikationsnummer. Beim Zeitstempel handelt es sich um einen fahrzeugweit eindeutigen Zeitpunkt, an dem der Datensatz von einem Producer generiert wurde. Bei der Version handelt es sich um eine vorbestimmte, eindeutige Version der Nutzdaten bzw. Information. Darüber hinaus können die im einheitlichen Datenformat abgelegten Daten weitere, geeignete Verwaltungsinformationsfelder besitzen.

Auf die in der ZIA im einheitlichen Datenformat abgelegten Daten sowie in diesen vorhandenen Nutzdaten kann aktiv zugegriffen werden und/oder die in den abgelegten Daten vorhandenen Nutzdaten können verarbeitet werden.

Beispielsweise können die Producer mithilfe entsprechend definierte Schnittstellen über Kommunikationsmodule Nutzdaten bzw. Informationen im einheitlichen Format in der ZIA ablegen bzw. lesend auf die ZIA zugreifen und/oder abrufen bzw. schreiben auf die ZIA zugreifen. Zudem können die von der ZIA gelesenen Daten, falls erforderlich, weiterverarbeitet werden indem z.B. Berechnungen über die bzw. mit den Daten durchgeführt werden.

Vorzugsweise umfasst die ZIA einen Arbeitsbereich, in dem geschützte, also insbesondere Sicherheitsrelevante bzw. Safety-relevante Daten bzw. Nachrichten verarbeitet werden können, wobei geschützte Nachrichten umfassen:
Protocol Data Units, PDUs, und/oder
Frames.

Bei den geschützten Nachrichten handelt es sich um so genannte Daten-Container, die eine Ende-zu-Ende-Absicherung aufweisen. Die Ende-zu-Ende-Absicherung kann über eine Prüfsumme, z.B. Cyclic Redundancy Check (CRC) realisiert werden. Somit ermöglicht der ZKS auch eine Datenspeicherung und Datenverarbeitung von in Daten-Containern enthaltenen Nutzdaten, so dass auch die darin enthaltenen Nutzdaten hinterlegt und auf diese zugegriffen werden kann und/oder diese verarbeitet werden können. Mit anderen Worten ist somit ein Zugriff auf abgesicherte Kommunikations-Wirkketten und somit ein Aufbruch von abgesicherten Kommunikations-Wirkketten möglich.

Vorzugsweise können die in der ZIA im einheitlichen Datenformat abgelegten Daten über entsprechende Jobs abgerufen und/oder verarbeitet werden, wobei sich jeder Job aus einer Abfolge von booleschen und mathematischen Ausdrücken zur Datenabfrage und/oder Datenverarbeitung zusammensetzt.

Wie bereits oben erwähnt, können über geeignete ZIA-Schnittstellen bzw. ZIA-APIs unterschiedliche Software-Module (bzw. Module) an die ZIA angebunden werden. So können über die Kommunikationsmodule, die eine Anbindung von gängigen Kommunikationssystemen im Bordnetz wie CAN, FlexRay, Ethernet oder LIN über Kommunikationskontroller ermöglichen, auch weitere Software-Module, wie z.B. ein Job-Modul, über eine entsprechend geeignete ZIA-API an die ZIA angebunden werden. Das Job-Modul kann dann mithilfe von Jobs auf die in der ZIA hinterlegten Daten zugreifen und/oder diese verarbeiten. Die jeweiligen Jobs können im Job-Modul hinterlegt sein. Somit können mithilfe von Jobs die in der ZIA hinterlegten Daten verarbeitet werden und neue Daten für die ZIA generiert werden, die beispielsweise von Consumern benötigt bzw. verbraucht werden.

Vorzugsweise kann die Verarbeitung von Jobs beim Auftreten von zumindest einem vorbestimmbaren Ereignis und/oder zyklisch und /oder bedarfsgesteuert erfolgen.

Ein vorbestimmbares bzw. vorbestimmtes Ereignis kann z.B. ein Zeitpunkt sein, an dem ein Producer des Bordnetzes Daten generiert (z.B. Geschwindigkeitsmessung) und über einen vordefinierten Busanschluss im Bordnetz über einen Kommunikationscontroller an ein Kommunikationsmodul sendet, welches die generierten Daten im einheitlichen Format in der ZIA ablegt. Nach dieser Ablage kann das Job-Modul über die ZIA-API auf den entsprechenden Datensatz zugreifen und z.B. die im Job definierten Berechnungen (z.B. Umrechnung von km/h auf 100m/h) durchführen. Die so umgerechneten Nutzdaten können vom Job-Modul über die entsprechende ZIA-API wieder in der ZIA hinterlegt werden. Zyklisch bedeutet, dass der Job über das Job-Modul beispielsweise in vorbestimmten Zeitabständen (z.B. alle 10 ms, alle 20ms, alle 50ms, etc.) durchgeführt werden. Bedarfsgesteuert bedeutet, dass der Job nur ausgeführt wird, wenn dies beispielsweise von einem anderen, über eine geeignete ZIA-API an die ZIA angebundenen Modul aktiv angefordert wird. Vorteilhafter Weise werden so Rechen- und Speicherkapazitäten geschont, da eine Job-Ausführung nur zu vorbestimmten Ereignissen bzw. bedarfsbestimmt erfolgt.

Vorzugsweise umfasst das zumindest eine Kommunikationsmodul:
- zumindest ein Ethernet-Modul zum Datenaustausch zwischen der ZIA und einem Ethernet-Anschluss; und/oder
- zumindest ein FlexRay, FR, -Modul zum Datenaustausch zwischen der ZIA und zumindest einem FR-Busanschluss; und/oder
- zumindest ein Controller Area Network, CAN, - Modul zum Datenaustausch zwischen der ZIA und ein oder mehreren CAN-Busanschlüssen; und/oder
- zumindest ein Local Interconnect Network, LIN, - Modul zum Datenaustausch zwischen der ZIA und ein oder mehreren LIN-Busanschlüssen.

Wie bereits oben ausgeführt, können unterschiedlich Module über entsprechende ZIA-Schnittstellen an die ZIA angebunden werden, worüber die Module schreibend und/oder lesend auf die ZIA zugreifen können. Bei den o.g. Modulen (Ethernet, FR, CAN und LIN) kann es sich jeweils um in der ZKS-Instanz gekapselte Software-Module handeln. Dabei können die jeweiligen Module zunächst jeweils an einen entsprechenden Kommunikationscontroller über geeignete Schnittstellen angebunden sein, über welche die Anbindung mit entsprechenden Kommunikationssysteme (d.h. CAN-Bus, FR-Bus, Ethernet und LIN-Bus) im Bordnetz erfolgt. In einem konkreten Beispiel kann ein FR-Modul über eine geeignete ZIA-API lesend und/oder schreibend auf die ZIA zugreifen. Zudem kann das FR-Modul mit einem entsprechenden Kommunikationscontroller verbunden sein, welcher für den Datenaustausch mit einem bestimmten FR-Busanschluss zuständig ist. An den FR-Busanschluss können selbst wieder ein oder mehrere Steuergeräte bzw. weitere Kommunikationsteilnehmer im Bordnetz als Consumer und/oder Producer gekoppelt sein. Die jeweiligen Module übernehmen somit die Kommunikationsanbindung der jeweiligen, verschiedenen Kommunikationsbusse wie CAN, FR, Ethernet und LIN.

Die Umwandlung der Daten ins einheitliche Datenformat kann auf alle geeigneten Arten erfolgen. In den jeweiligen Bordnetzmodulen (LIN, CAN, FR, ETH) kann eine Abstraktion von den Bordnetz-spezifischen Ausprägungen der Informationen (Signale oder Services) auf die einheitliche Form bzw. das einheitliche Datenformat in der ZIA stattfinden. Beispielsweise kann im Fall von CAN anhand der CAN-Frame-ID der Inhalt der Payload identifiziert werden. Die Inhalte werden dann auf die jeweiligen Informationen in der ZIA abgebildet. Die busspezifischen Serialisierungen von Informationen bzw. Daten werden auch als Sichten auf Informationen bzw. Daten aus der ZIA bezeichnet.

Vorzugsweise umfasst das Gateway-Steuergerät zudem zumindest ein Speichermedium. Zudem umfasst der ZKS
- ein Logging-Modul welches beim Auftreten von zumindest einem vorbestimmbaren Ereignis und/oder zyklisch zumindest einen Teil der im einheitlichen Datenformat abgelegten Daten von der ZIA in das Speichermedium übertragen kann; und/oder
- ein Tracing-Modul welches beim Auftreten von zumindest einem vorbestimmbaren Ereignis und/oder zyklisch zumindest einen Teil der im einheitlichen Datenformat abgelegten Daten von der ZIA und optional zusätzliche technische Parameter entsprechender bzw. dazugehöriger Daten bzw. Frames von dem zumindest einen Kommunikationsmodul in das Speichermedium übertragen kann.

Das Logging-Modul kann ein weiteres, in der ZKS-Instanz gekapseltes Software-Modul sein, welches über eine entsprechende ZIA-API an die ZIA angebunden ist. Beim Auftreten eines vorbestimmbaren bzw. vorbestimmten Ereignisses (z.B. Event) kann das Logging-Modul zumindest einen Teil der im einheitlichen Datenformat abgelegten Daten von der ZIA in das Speichermedium übertragen, wo diese dann gespeichert werden können. Das Speichermedium kann ein persistenter Speicher sein. Beispielsweise können so die im einheitlichen Datenformat abgelegten Daten oder zumindest die Nutzdaten der Daten hinsichtlich bestimmter Fahrzeugzustandsinformationen im persistenten Speicher zu einer späteren Auswertung hinterlegt werden.

Das Tracing-Modul kann ein weiteres, in der ZKS-Instanz gekapseltes Software-Modul sein. Beim Auftreten des vorbestimmbaren bzw. vorbestimmten Ereignisses kann das Tracing-Modul zusätzlich zumindest einen oder mehrere technische Parameter eines oder mehrerer entsprechender Datensätze bzw. Frames von dem entsprechenden Kommunikationsmodul bzw. Busmodul, von dem die ein oder mehreren Datensätze hinsichtlich bestimmter Fahrzeugzustandsinformationen stammen, in den persistenten Speicher übertragen, wo diese dann gespeichert werden. Somit werden durch das Logging-Modul Daten aus der ZIA entnommen, wohingegen durch das Tracing-Modul weitere, zu den jeweiligen Datensätzen gehörige Daten bzw. Informationen bzw. technische Parameter aus den Kommunikationsmodulen bzw. Busmodulen extrahiert und in den persistenten Speicher übertragen werden können. Vorteilhafter Weise können somit Fehler auf Bordnetzebene aufgefunden bzw. gefunden werden.

Somit kann im Fahrzeug beispielsweise ein Eventrecorder bzw. Daten-Recorder realisiert werden.

Gemäß einem zweiten Aspekt wird die Aufgabe durch ein Verfahren zum Management von Daten, die über ein Bordnetz übertragen werden gelöst, umfassend:
zentrale Ablage von Daten, die über das Bordnetz übertragen werden, in einer zentralen Informationsablage, ZIA;
wobei die Datenübertragung zwischen der ZIA und zumindest einem zum Bordnetz gehörigen Bussystem über zumindest ein Kommunikationsmodul stattfindet;
wobei die über das Kommunikationsmodul übertragenen und in ein einheitliches Datenformat umgewandelten Daten in der ZIA abgelegt werden, und wobei auf die in der ZIA im einheitlichen Datenformat abgelegten Daten sowie in diesen vorhandenen Nutzdaten aktiv zugegriffen werden kann und/oder die in den Daten vorhandenen Nutzdaten verarbeiten werden können.

Gemäß einem dritten Aspekt wird die Aufgabe durch ein Bordnetz für ein Fahrzeug gelöst, welches zumindest ein Gateway-Steuergerät gemäß einem der Ansprüche 1-8 umfasst.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen verdeutlich. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein beispielhaftes Gateway-Steuergerät;
- **Fig. 2**: zeigt beispielhafte Datensätze wie in einer ZIA-Instanz hinterlegt

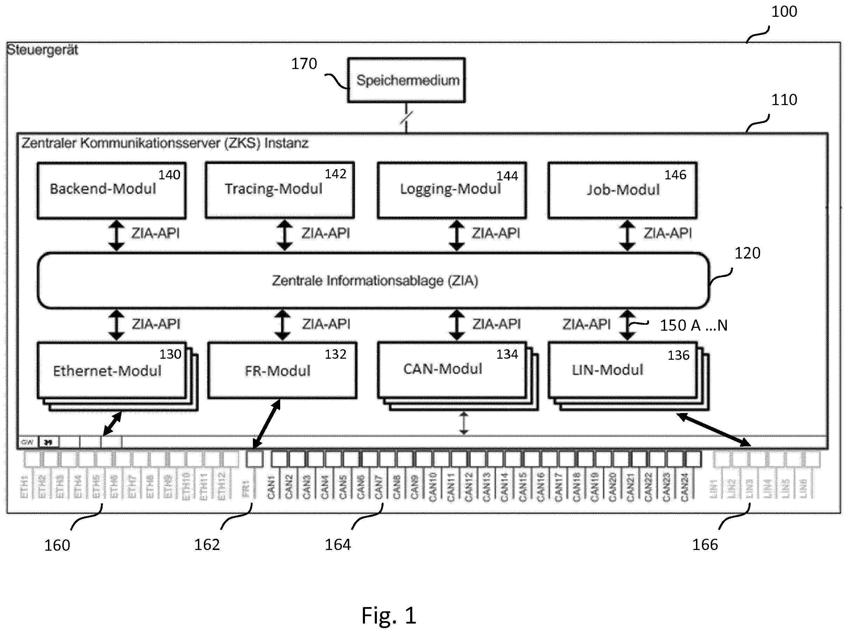

**Figur 1** zeigt ein beispielhaftes Gateway-Steuergerät 100 zum Management von Daten, die über ein Bordnetz in einem Fahrzeug, insbesondere einem Landfahrzeug, übertragen werden.

Das zentrale Gateway-Steuergerät kann ein Steuergerät sein, welches zumindest einen zentralen Kommunikationsserver, ZKS, bzw. eine zentrale ZKS-Instanz 110, umfasst. Mit anderen Worten, auch wenn in Figur 1 exemplarisch der Einfachheit halber nur eine ZKS 110 gezeigt wird, können ein oder mehrere ZKS-Instanzen 110 (im Folgenden: ZKS) in ein oder mehreren Gateway-Steuergeräten 100 implementiert werden. In dem Fall von mehreren ZKS-Instanzen 110 (die auf mehreren Gateway-Steuergeräten instanziiert werden können), können die einzelnen entsprechenden ZIAs 120 jeweils untereinander Informationen austauschen, damit die Datensätze 200A...N der jeweiligen ZIAs 120 untereinander synchronisiert werden können. Dies hat den Vorteil, dass die in den jeweiligen ZIAs hinterlegten Daten redundant im Fahrzeug vorgehalten werden können.

Auch eine Bereitstellung verschiedener Skalierungsstufen ein oder mehrerer ZKS-Instanzen in einem Fahrzeug ist möglich, z.B. eine Basis-Umsetzung (z.B. nur eine ZKS 110 mit einer beschränkten Anzahl an Kommunikationsmodulen 130, 132, 134, 136 und weiteren Software-Modulen 140, 142, 144, 146 mit eingeschränkter Rechenleistung und beschränkten Speicherplatz für Fahrzeuge mit wenigen elektronischen Komponenten bis hin zu einer Bereitstellung umfangreicher Funktionen für Fahrzeuge mit sehr vielen elektronischen Komponenten. Die Datensätze, die in den ZIA-Instanzen hinterlegt sind, können untereinander synchronisiert werden (Redundante Auslegung im Fahrzeug). In einem anderen Beispiel findet keine Synchronisierung der ZIAs statt. Stattdessen tauschen die verschiedenen ZIA-Instanzen (bzw. ZIAs) untereinander benötigte Datensätze aus, falls erforderlich. Mit anderen Worten, pro Fahrzeug ist eine beliebige Anzahl and ZKS-Instanzen 110 mit jeweils einer beliebigen, geeigneten Kombination ein oder mehrerer Software-Module 130, 132, 134, 136, 140, 142, 144, 146 möglich. Der Übersicht halber wird mit Bezug auf Figur 1 eine ZKS-Instanz 110 auf einem Gateway-Steuergerät 100 erläutert.

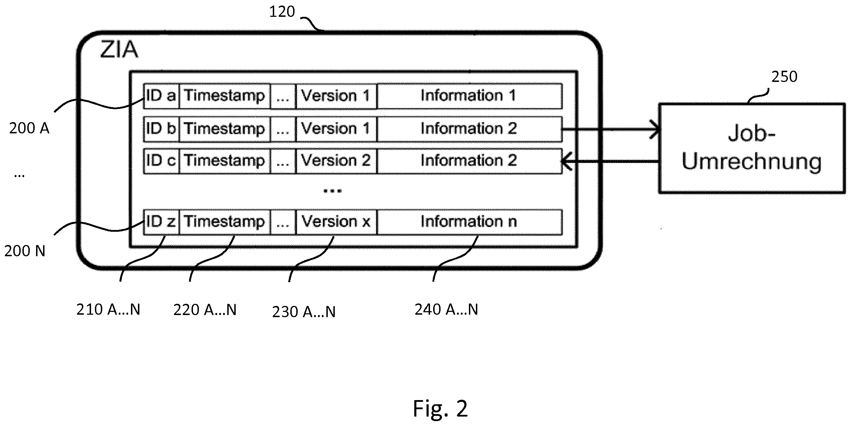

Der ZKS 110 (bzw. die ZKS-Instanz 110) ist ein Software-Modul, welches auf dem Gateway-Steuergerät 100 instanziiert wird. Der ZKS 110 umfasst zumindest eine zentrale Informationsablage (ZIA) 120 zur Ablage von Datensätzen 200A...N. Jedes ZKS 110 umfasst zumindest ein weiteres Software-Modul, ein Kommunikationsmodul 130, 132, 134, 136 zur Datenübertragung zwischen der ZIA 120 und zumindest einem zum Bordnetz gehörigen Kommunikationsbus, wie z.B. Controller Area Network (CAN), FlexRay (FR), Ethernet und Local Interconnect Network (LIN). Die ZIA 120 ist somit ein Speicherbereich, in welchem Datensätze 200A...N, die über ein Bordnetz in einem Fahrzeug versendet werden, in einem einheitlichen Format abgelegt werden können. Das einheitliche Format der Datensätze 200A...N die auf der ZIA hinterlegt werden, wird weiter unten mit Bezug auf **Figur 2** näher erläutert.

Das zumindest eine Kommunikationsmodul 130, 132, 134, 136 kann dabei lesend bzw. schreibend auf die ZIA 120 zugreifen. Dies kann über entsprechend definierte, jeweils geeignete ZIA-Schnittstellen bzw. ZIA-APIs 150A...N erfolgen. Das zumindest eine Kommunikationsmodul 130, 132, 134, 136 umfasst im vorliegenden Beispiel:
- zumindest ein Ethernet-Modul 130 zum Datenaustausch zwischen der ZIA 120 und zumindest einem Ethernet-Anschluss 160;
- zumindest ein FlexRay (FR)-Modul 132 zum Datenaustausch zwischen der ZIA 120 und zumindest einem FR-Busanschluss;
- zumindest ein Controller Area Network (CAN) - Modul 134 zum Datenaustausch zwischen der ZIA 120 und ein oder mehreren CAN-Busanschlüssen; und/oder
- zumindest ein Local Interconnect Network, LIN, - Modul 136 zum Datenaustausch zwischen der ZIA 120 und ein oder mehreren LIN-Busanschlüssen.

Wie bereits oben ausgeführt, können unterschiedlich Software-Module über entsprechende ZIA-Schnittstellen bzw. ZIA-APIs 150A...N an die ZIA 120 angebunden werden, worüber die Module schreibend und/oder lesend auf die ZIA 120 zugreifen können. Bei den o.g. Modulen (Ethernet 130, FR 132, CAN 134 und LIN 136) kann es sich jeweils um in der ZKS-Instanz 110 gekapselte Software-Module handeln. Dabei können die jeweiligen Kommunikations-Module 130, 132, 134, 136 zunächst jeweils mit einem entsprechenden Kommunikationscontroller (nicht gezeigt) über geeignete Schnittstellen angebunden sein, über welche die Anbindung mit entsprechenden Kommunikationsbussen (d.h. CAN, FR, Ethernet und LIN) über ein oder mehrere, entspreche Busanschlüsse 160, 162, 164, 166 im Bordnetz erfolgt. In einem konkreten Beispiel kann ein FR-Modul 132 über eine geeignete ZIA-API 150A...N lesend und/oder schreibend auf die ZIA 120 zugreifen. Zudem kann das FR-Modul 132 mit einem entsprechenden Kommunikationscontroller (nicht gezeigt) verbunden sein, welcher für den Datenaustausch mit einem bestimmten FR-Busanschluss 162 zuständig ist. An den FR-Busanschluss 162 können selbst wieder ein oder mehrere Steuergeräte bzw. weitere Kommunikationsteilnehmer im Bordnetz des Fahrzeugs als Consumer und/oder Producer gekoppelt sein. Analoges gilt für die in oder mehreren anderen Kommunikationsmodule 130, 134, 136.

Wie bereits oben erwähnt können die Kommunikationsmodule 130, 132, 134, 136 über entsprechende, geeignete ZIA-APIs 150A...N lesend bzw. schreibend auf die ZIA 120 zugreifen. Dabei ist jede ZIA-API 150A...N eine definierte, geeignete ZIA-Schnittstelle 150A...N, über die die entsprechenden Kommunikationsmodule 130, 132, 134, 136 auf Datensätze 200A...N die auf der ZIA 120 hinterlegt sind, lesend zugreifen können bzw. Datensätze 200A...N auf bzw. in die ZIA 120 schreiben können. Die jeweiligen Kommunikationsmodule 130, 132, 134, 136 übernehmen somit die Kommunikationsanbindung der jeweiligen, verschiedenen Kommunikationsbusse wie CAN, FR, Ethernet und LIN.

Darüber hinaus kann das Gateway-Steuergerät 100 zudem zumindest ein Speichermedium 170 umfassen. Die ZKS-Instanz 110 kann darüber hinaus ein Logging-Modul 144 umfassen, welches beim Auftreten von zumindest einem vorbestimmbaren Ereignis und/oder zyklisch zumindest einen Teil eines oder mehrerer entsprechender Datensätze 200A...N von der ZIA in das Speichermedium 170 übertragen kann. Das Logging-Modul 144 kann ein weiteres, in der ZKS-Instanz 110 gekapseltes Software-Modul sein, welches über eine entsprechende ZIA-API 150A...N an die ZIA 120 angebunden sein kann. Beim Auftreten eines vorbestimmbaren bzw. vorbestimmten Ereignisses (z.B. Event) kann das Logging-Modul 144 zumindest einen Teil eines oder mehrerer entsprechender Datensätze 200A...N von der ZIA 120 in das Speichermedium 170 übertragen, wo diese dann gespeichert werden können. Das Speichermedium 170 kann ein persistenter Speicher sein. Beispielsweise können so ein oder mehrere Datensätze 200A...N oder zumindest die Nutzdaten 240A...N der ein oder mehreren Datensätze 200A...N hinsichtlich bestimmter, geeigneter Fahrzeugzustandsinformationen im persistenten Speicher 170 zu einer späteren Auswertung hinterlegt werden.

Darüber hinaus kann der ZKS ein Tracing-Modul 142 umfassen, welches beim Auftreten von zumindest einem vorbestimmbaren Ereignis und/oder zyklisch zumindest einen Teil eines oder mehrerer entsprechender Datensätze 200A...N von der ZIA 120 in das Speichermedium 170 übertragen kann. Das Tracing-Modul 142 kann ein weiteres, in der ZKS-Instanz 110 gekapseltes Software-Modul sein. Beim Auftreten eines vorbestimmbaren bzw. vorbestimmten Ereignisses kann das Tracing-Modul 142 zumindest einen Teil eines oder mehrerer entsprechender Datensätze 200A...N von der ZIA 120 in den persistenten Speicher 170 übertragen, wo diese dann gespeichert werden können. Somit kann im Fahrzeug beispielsweise ein Eventrecorder bzw. Daten-Recorder über das Gateway-Steuergerät 100 realisiert werden. Das Tracing-Modul 142 kann ein weiteres, in der ZKS-Instanz gekapseltes Software-Modul sein. Beim Auftreten des vorbestimmbaren bzw. vorbestimmten Ereignisses kann das Tracing-Modul 142 zusätzlich von zumindest einen technischen Parameter oder weiterer, relevanter Daten bzw. Informationen von dem dazugehörigen Kommunikationsmodul bzw. Busmodul 130, 132, 134, 136 in den persistenten Speicher 170 übertragen, wo diese dann gespeichert werden können. Somit werden durch das Logging-Modul 144 Daten aus der ZIA 120 entnommen, wohingegen durch das Tracing-Modul 142 darüber hinaus weitere, zu den jeweiligen Datensätzen 200A...N gehörige Daten bzw. Informationen bzw. technische Parameter aus den entsprechenden Kommunikationsmodulen bzw. Busmodulen 130, 132, 134, 136 extrahiert und in den persistenten Speicher 170 übertragen werden können. Vorteilhafter Weise können somit Fehler auf Bordnetzebene aufgefunden bzw. gefunden werden.

Vorteilhaft dient das Gateway-Steuergerät 100 somit nicht lediglich zum Routen von Nachrichten zwischen verschiedenen (Nachrichten-) Producern bzw. Erzeugern und (Nachrichten-) Consumern bzw. Verbrauchern im Bordnetz sondern ist erstmals in der Lage, die auszutauschenden Daten in der ZIA 120 über Datensätze 200A...N zu hinterlegen. Wie bereits oben ausgeführt handelt es sich Producern um Komponenten bzw. Kommunikationsteilnehmer im Bordnetz (z.B. Steuergeräte, Sensoren, Anzeigeelemente, etc.), die bestimmte Daten bzw. Datensätze generieren und bei Consumern um Komponenten bzw. Kommunikationsteilnehmer im Bordnetz, die zumindest Nutzdaten von Producern konsumieren. Da die Daten in der ZIA 120 in Datensätzen 200A...N hinterlegt werden, kann das Gateway-Steuergerät 100 z.B. über ein in der ZKS-Instanz 110 realisiertes (Teil-) Softwaremodul auf die in der ZIA 120 hinterlegten Datensätze 200A...N und somit insbesondere auf die Nutzdaten bzw. Informationen 240A...N zugreifen. Darüber hinaus kann das Gateway-Steuergerät 100 aufgrund der einheitlichen Datensatzstruktur der Datensätze 200A...N zumindest deren Nutzdaten 240A...N aus diesen extrahieren und entsprechend verarbeiten.

Vorzugsweise kann so über die entsprechenden ZIA-APIs 150A...N auf die in der ZIA 120 abgelegten Datensätze 200A...N sowie in diesen vorhandenen Nutzdaten bzw. Informationen 240A...N aktiv zugegriffen werden. Dadurch können die in den abgelegten Datensätzen 240A...N vorhandenen Nutzdaten 240A...N auch weiterverarbeitet werden, wie weiter unten mit Bezug auf das Job-Modul 146 näher beschrieben. Insbesondere können die Producer im Bordnetz mithilfe entsprechend definierter Schnittstellen zu Kommunikationskontrollern über Kommunikationsmodule 130, 132, 134, 136 die erfassten Daten im einheitlichen Format in der ZIA 120 ablegen.

Darüber hinaus kann die ZIA 120 einen Arbeitsbereich (nicht gezeigt) umfassen, in dem in der ZIA 120 geschützte Nachrichten verarbeitet werden können. Geschützte Nachrichten können beispielsweise Protocol Data Units, PDUs, und/oder Frames sein. Insbesondere handelt es sich bei den geschützten Nachrichten um so genannte Daten-Container, die eine Ende-zu-Ende-Absicherung aufweisen. Die Ende-zu-Ende-Absicherung kann über eine Prüfsumme, z.B. Cyclic Redundancy Check (CRC) und/oder Alive-Zähler realisiert werden. Somit ermöglicht der ZKS auch eine Datenspeicherung und Datenverarbeitung von in Daten-Containern enthaltenen Datensätzen, so dass auch in den Daten-Containern enthaltenen Datensätze in der ZIA 210 in Datensätzen (200A...N) hinterlegt werden können. Somit können Consumer auch auf diese Daten zugreifen und/oder diese verarbeiten.

Darüber hinaus kann die ZKS-Instanz ein Job-Modul 146 umfassen. Bei dem Job-Modul 146 kann es sich um ein Software-Modul handeln, welches über eine geeigneten ZIA-API 150A...N auf die in der in der ZIA120 abgelegten Datensätze 200A...N über entsprechende Jobs zugreifen und/oder diese verarbeiten kann. Jeder Job kann sich aus einer Abfolge von booleschen und mathematischen Ausdrücken zur Datenabfrage und/oder Datenverarbeitung zusammensetzen .Wie bereits oben erwähnt, können über geeignete ZIA-Schnittstellen bzw. ZIA-APIs 150A...N unterschiedliche Software-Module (bzw. Module) an die ZIA angebunden werden. So können über die Kommunikationsmodule, die eine Anbindung von gängigen Kommunikationssystemen im Bordnetz wie CAN, FlexRay, Ethernet oder LIN über Kommunikationskontroller ermöglichen, können auch weitere Module, wie z.B. das Job-Modul 146 über eine entsprechend geeignete ZIA-API 150A...N an die ZIA angebunden werden. Das Job-Modul 146 kann dann mithilfe von Jobs auf die in der ZIA hinterlegten Datensätze 200A...N zugreifen und/oder diese verarbeiten.

Dabei kann die Verarbeitung von Jobs beim Auftreten von zumindest einem vorbestimmbaren Ereignis und/oder zyklisch und /oder bedarfsgesteuert erfolgen. Ein vorbestimmbares bzw. vorbestimmtes Ereignis kann z.B. ein Zeitpunkt sein, an dem ein Producer des Bordnetzes Daten generiert (z.B. Geschwindigkeitsmessung) und über einen vordefinierten Busanschluss 160, 162, 164, 166 im Bordnetz über einen entsprechend angebundenen Kommunikationscontroller an ein Kommunikationsmodul 130, 132, 134, 136 sendet, welches die generierten Daten im einheitlichen Format als Datensatz 200A...N in der ZIA 120 ablegt. Nach dieser Ablage kann das Job-Modul 146 über die ZIA-API 150A...N auf den entsprechenden Datensatz 200A...N zugreifen und z.B. die im Job definierten Berechnungen (z.B. Umrechnung von km/h auf 100m/h) durchführen. Die so umgerechneten Nutzdaten können vom Job-Modul über die entsprechende ZIA-API 150A...N wieder in der ZIA 120 hinterlegt werden. Zyklisch bedeutet, dass der entsprechende Job über das Job-Modul 146 beispielsweise in vorbestimmten Zeitabständen (z.B. alle 10 ms, alle 20ms, alle 50ms, etc.) durchgeführt wird. Bedarfsgesteuert bedeutet, dass der entsprechende Job nur ausgeführt wird, wenn dies beispielsweise von einem anderen, über eine geeignete ZIA-API 150A...N an die ZIA 120 angebundenen Modul aktiv angefordert wird. Vorteilhafter weise werden so Rechen- und Speicherkapazitäten minimiert, da eine Job-Ausführung nur zu vorbestimmten Ereignissen bzw. bedarfsbestimmt erfolgt.

Darüber hinaus kann die ZKS-Instanz 110 ein Backend-Modul 140 umfassen, welches über eine geeignete ZIA-API 150A...N lesend und/oder schreibend auf die ZIA 120 zugreifen kann. Über das Backend-Modul 140 kann eine Anbindung der ZIA 120 an ein Fahrzeug-externes Netzwerk (Backend-Kommunikation) erfolgen. Beispielsweise können ein oder mehrere Backend-Server auf das Backend-Modul 140 schreibend zugreifen, wenn ein Producer von einem Consumer benötigte Nutzdaten 240A...N nicht liefern kann. Beispielsweise kann im Falle von Fahrzeugen, die zumindest einen zumindest teil-autonomen Fahrmodus unterstützen, erforderlich sein, dass ein Producer, beispielsweise eine Kamera, die im Fahrzeug verbaut ist, Straßenschilder hinsichtlich der aktuell erlaubten Höchstgeschwindigkeit erkennt und einem Consumer, z.B. einem automatischen Geschwindigkeitsregler im Fahrzeug über die ZIA 120 in einem

Datensatz zugänglich macht. Falls der Producer - d.h. die Kamera - allerdings die zulässige Höchstgeschwindigkeit auf einem Schild nicht erkennen kann, kann die aktuell zulässige Höchstgeschwindigkeit über das Backend-Modul 140 von einem Backend-Server (nicht gezeigt) abgerufen und über die entsprechende ZIA-API 150A...N auf der ZIA 120 hinterlegt und somit dem Consumer zur Verfügung gestellt werden.

**Figur 2** zeigt Datensätze 200A...N, die in der ZIA 120 wie mit Bezug auf Figur 1 beschrieben, hinterlegt sein können. Dabei kann jeder der hinterlegten Datensätze 200A...N eine eindeutige Identifikation, ID, 210A...N umfassen. Bei der eindeutigen ID 210A...N kann es sich um eine fahrzeugweit eindeutige Identifikationsnummer handeln. Zudem oder alternativ dazu kann jeder Datensatz 200A...N einen Zeitstempel 220A...N umfassen. Beim Zeitstempel 220A...N kann es sich um einen fahrzeugweit eindeutigen Zeitpunkt handeln, an dem die entsprechenden Daten von einem Producer generiert wurden. Zudem oder alternativ dazu kann jeder Datensatz 200A...N eine eindeutige Version 230A...N umfassen. Bei der Version 230A...N handelt es sich um eine vorbestimmte, eindeutige Version der Nutzdaten bzw. Information 240A...N. Zudem kann jeder Datensatz 200A...N Nutzdaten bzw. Informationen 240A...N umfassen.

Über das Gateway-Steuergerät 100 kann somit eine Bordnetzkonfiguration zur Entwicklungszeit erfolgen, bei der die Befüllung der ZIA zunächst definiert werden kann. Mit anderen Worten kann die Zuordnung von auf vordefinierten Bussen einhergehenden Daten vordefinierter Producer, der Identifikation der Nachricht über eine Frame-ID oder in den Nutzdaten enthaltenen Identifier zu einer spezifischen Information die von vorbestimmten Kommunikationsteilnehmern erstellt werden, festgelegt werden. Darüber hinaus ist aber auch eine dynamische Bornetzkonfiguration erfolgen. Beispielsweise kann eine neue Version eines Steuergeräts eingeführt werden, welcher für die Messung der aktuellen Geschwindigkeit im Fahrzeug zuständig ist. In diesem Beispiel kann eine alte, aktuelle Version des Steuergeräts die Geschwindigkeit mit einer Genauigkeit von km/h erfassen. Die neue Version des Steuergeräts kann die Geschwindigkeit mit einer Genauigkeit von 100m/h erfassen. Die neue Version des Steuergeräts kann eingeführt werden, indem die Daten, die generiert werden, unter derselben ID, aber mit einer entsprechenden eindeutigen Version 230A...N (z.B. altes Gerät Version 1, neues Gerät Version 2) hinterlegt werden. Darüber hinaus kann im Job-Modul 146 ein Job hinterlegt werden, der aus den Daten der neuen Version (in 100m/h) in Daten der alten Version in (km/h) umrechnet. Die so umgerechneten Daten können entsprechend versioniert in der ZIA 120 abgelegt werden und/oder direkt an die entsprechenden Consumer gesendet werden. Dies kann erforderlich sein für Consumer, die nur Daten in km/h weiterverarbeiten können (z.B. um die Durchschnittsgeschwindigkeit zu berechnen als Eingabe einen Wert in km/h erfordern). Eine Zuordnung, welche Producer Daten in welcher Version Produzieren und welche Consumer Daten in welcher Version Konsumieren, kann dabei in einem persistenten Speicher in der ZKS-Instanz 110 oder im Steuergerät 100 interlegt sein. Somit kann die Zuordnung eines bestimmten Steuergeräts bzw. Kommunikationsteilnehmers im Bordnetz zu einem spezifischen Busanschluss 160, 162, 164, 166 aufgehoben werden.

Um Speicherplatz in der ZIA 120 zu sparen, kann sich die Ablage der Datensätze 200A...N auf den jeweils gemäß dem fahrzeugweit eindeutigen Zeitstempel 220A...N neuesten Datensatz beschränken bzw. eine vorher definierte Historie aufweisen (z.B. die letzten N Datensätze).

## Patentansprüche

1. Zentrales Gateway-Steuergerät (100) zum Management von Daten, die über ein Bordnetz übertragen werden, umfassend:
zumindest einen zentralen Kommunikationsserver, ZKS, (110) umfassend:
- zumindest eine zentrale Informationsablage, ZIA, (120) zur zentralen Ablage von Daten, die über das Bordnetz übertragen werden;
- zumindest ein Kommunikationsmodul (130, 132, 134, 136) zur Datenübertragung zwischen der ZIA (120) und zumindest einem zum Bordnetz gehörigen Bussystem (160, 162, 164, 166);
**dadurch gekennzeichnet, dass** das Gateway-Steuergerät (100) eingerichtet ist, um die über das Kommunikationsmodul (130, 132, 134, 136) übertragenen und in ein einheitliches Datenformat umgewandelten Daten in der ZIA (120) abzulegen, wobei auf die in der ZIA (120) im einheitlichen Datenformat abgelegten Daten sowie in diesen vorhandenen Nutzdaten aktiv zugegriffen werden kann und/oder die in den Daten vorhandenen Nutzdaten verarbeiten werden können.

2. Gateway-Steuergerät (100) gemäß Anspruch 1, wobei die in der ZIA (120) einheitlichen Datenformat abgelegten Daten umfassen:
- eine eindeutige Identifikation, ID, (210A...N);
- einen Zeitstempel (220A...N);
- eine Version (230A...N); und/oder
- Nutzdaten (240A...N).

3. Gateway-Steuergerät (100) gemäß einem der vorangehenden Ansprüche, wobei die ZIA (120) einen Arbeitsbereich umfasst, in dem geschützte Nachrichten verarbeitet werden können, wobei geschützte Nachrichten umfassen:
- Protocol Data Units, PDUs, und/oder
- Frames.

4. Gateway-Steuergerät (100) gemäß einem der Ansprüche 1 oder 3, wobei die in der ZIA (120) einheitlichen Datenformat abgelegten Daten über entsprechende Jobs abgerufen und/oder verarbeitet werden können, wobei sich jeder Job aus einer Abfolge von booleschen und mathematischen Ausdrücken zur Datenabfrage und/oder Datenverarbeitung zusammensetzt.

5. Gateway-Steuergerät (100) gemäß Anspruch 4, wobei die Verarbeitung von Jobs beim Auftreten von zumindest einem vorbestimmbaren Ereignis und/oder zyklisch und /oder bedarfsgesteuert erfolgen kann.

6. Gateway-Steuergerät (100) gemäß einem der vorangehenden Ansprüche, wobei das zumindest eine Kommunikationsmodul (130, 132, 134, 136) umfasst:
- zumindest ein Ethernet-Modul (130) zum Datenaustausch zwischen der ZIA (120) und einem Ethernet-Anschluss; und/oder
- zumindest ein FlexRay, FR, -Modul (132) zum Datenaustausch zwischen der ZIA (120) und zumindest einem FR-Busanschluss (162); und/oder
- zumindest ein Controller Area Network, CAN, - Modul (134) zum Datenaustausch zwischen der ZIA (120) und ein oder mehreren CAN-Busanschlüssen; und/oder
- zumindest ein Local Interconnect Network, LIN, - Modul (136) zum Datenaustausch zwischen der ZIA (120) und ein oder mehreren LIN-Busanschlüssen.

7. Gateway-Steuergerät (100) gemäß einem der vorangehenden Ansprüche, zudem umfassend:
zumindest ein Speichermedium (170);
wobei der ZKS zudem umfasst:
- ein Logging-Modul (144) welches beim Auftreten von zumindest einem vorbestimmbaren Ereignis und/oder zyklisch zumindest einen Teil der Daten von der ZIA (120) in das Speichermedium (170) übertragen kann; und/oder
- ein Tracing-Modul (142) welches beim Auftreten von zumindest einem vorbestimmbaren Ereignis und/oder zyklisch zumindest einen Teil der Daten von der ZIA (120) in das Speichermedium (170) und optional zusätzliche technische Parameter entsprechender bzw. dazugehöriger Daten bzw. Frames von dem zumindest einen Kommunikationsmodul (130, 132, 134, 136) in das Speichermedium (170) übertragen kann.

8. Verfahren zum Datenmanagement von Daten, die über ein Bordnetz übertragen werden, umfassend:
zentrale Ablage von Daten, die über das Bordnetz übertragen werden, in einer zentralen Informationsablage, ZIA, (120);
wobei die Datenübertragung zwischen der ZIA (120) und zumindest einem zum Bordnetz gehörigen Bussystem über zumindest ein Kommunikationsmodul (130, 132, 134, 136) stattfindet;
**dadurch gekennzeichnet, dass** die über das Kommunikationsmodul (130, 132, 134, 136) übertragenen und in ein einheitliches Datenformat umgewandelten Daten in der ZIA (120) abgelegt werden, wobei auf die in der ZIA (120) im einheitlichen Datenformat abgelegten Daten sowie in diesen vorhandenen Nutzdaten aktiv zugegriffen werden kann und/oder die in den Daten vorhandenen Nutzdaten verarbeiten werden können.

9. Bordnetz für ein Fahrzeug umfassend zumindest ein Gateway-Steuergerät gemäß einem der Ansprüche 1-7.

## Claims

1. Central gateway controller (100) for managing data that are transmitted via an on-board electrical system, comprising:
at least one central communication server, ZKS, (110) comprising:
― at least one central information store, ZIA, (120) for the central storage of data that are transmitted via the on-board electrical system,
― at least one communication module (130, 132, 134, 136) for transmitting data between the ZIA (120) and at least one bus system (160, 162, 164, 166) belonging to the on-board electrical system;
**characterized in that** the gateway controller (100) is configured to store the data transmitted via the communication module (130, 132, 134, 136) and converted into a uniform data format in the ZIA (120), wherein the data stored in the uniform data format in the ZIA (120) and useful data present therein are able to be accessed actively and/or the useful data present in the data are able to be processed.

2. Gateway controller (100) according to Claim 1, wherein the data stored in the uniform data format in the ZIA (120) comprise:
― a unique identification, ID, (210A...N) ;
― a timestamp (220A...N) ;
― a version (230A...N); and/or
― useful data (240A...N) .

3. Gateway controller (100) according to either of the preceding claims, wherein the ZIA (120) comprises a working area in which protected messages are able to be processed, protected messages comprising:
― protocol data units, PDUs, and/or
― frames.

4. Gateway controller (100) according to one of Claims 1 to 3, wherein the data stored in the uniform data format in the ZIA (120) are able to be retrieved and/or processed via corresponding jobs, wherein each job is formed from a sequence of Boolean and mathematical expressions for data querying and/or data processing purposes.

5. Gateway controller (100) according to Claim 4, wherein jobs may be processed upon the occurrence of at least one predeterminable event and/or cyclically and/or according to need.

6. Gateway controller (100) according to one of the preceding claims, wherein the at least one communication module (130, 132, 134, 136) comprises:
― at least one Ethernet module (130) for exchanging data between the ZIA (120) and an Ethernet connection; and/or
― at least one FlexRay, FR, module (132) for exchanging data between the ZIA (120) and at least one FR bus connection (162); and/or
― at least one Controller Area Network, CAN, module (134) for exchanging data between the ZIA (120) and one or more CAN bus connections; and/or
― at least one Local Interconnect Network, LIN, module (136) for exchanging data between the ZIA (120) and one or more LIN bus connections.

7. Gateway controller (100) according to one of the preceding claims, additionally comprising:
at least one storage medium (170);
wherein the ZKS additionally comprises:
― a logging module (144) that is able to transmit at least some of the data from the ZIA (120) into the storage medium (170) upon the occurrence of at least one predeterminable event and/or cyclically; and/or
― a tracing module (142) that is able to transmit at least some of the data from the ZIA (120) into the storage medium (170) and optionally additional technical parameters of corresponding or associated data or frames from the at least one communication module (130, 132, 134, 136) into the storage medium (170) upon the occurrence of at least one predeterminable event and/or cyclically.

8. Method for the management of data that are transmitted via an on-board electrical system, comprising:
central storage of data that are transmitted via the on-board electrical system in a central information store, ZIA, (120);
wherein the data transmission between the ZIA (120) and at least one bus system belonging to the on-board electrical system takes place via at least one communication module (130, 132, 134, 136);
**characterized in that** the data transmitted via the communication module (130, 132, 134, 136) and converted into a uniform data format are stored in the ZIA (120), wherein the data stored in the uniform data format in the ZIA (120) and useful data present therein are able to be accessed actively and/or the useful data present in the data are able to be processed.

9. On-board electrical system for a vehicle comprising at least one gateway controller according to one of Claims 1 to 7.

## Revendications

1. Contrôleur de passerelle (100) central pour la gestion de données qui sont transmises par le biais d'un réseau de bord, comprenant :
au moins un serveur de communication central, ZKS, (110), comprenant :
- au moins un dépôt d'informations central, ZIA, (120) servant au dépôt central de données qui sont transmises par le biais d'un réseau de bord ;
- au moins un module de communication (130, 132, 134, 136) servant à la transmission de données entre le ZIA (120) et au moins un système de bus (160, 162, 164, 166) faisant partie du réseau de bord ;
**caractérisé en ce que** le contrôleur de passerelle (100) est conçu pour déposer dans le ZIA (120) les données transmises par le biais du module de communication (130, 132, 134, 136) et converties en un format de données uniforme, un accès actif étant possible aux données déposées dans le format de données uniforme dans le ZIA (120) ainsi qu'aux données utiles présentes dans celles-ci et/ou les données utiles présentes dans les données pouvant être traitées.

2. Contrôleur de passerelle (100) selon la revendication 1, les données dans le format de données uniforme déposées dans le ZIA (120) comprenant :
- une identification univoque, ID, (210A...N) ;
- une estampille temporelle (220A...N) ;
- une version (230A...N) ; et/ou
- des données utiles (240A...N).

3. Contrôleur de passerelle (100) selon l'une des revendications précédentes, le ZIA (120) comprenant une zone de travail dans laquelle peuvent être traités des messages protégés, les messages protégés comprenant :
- des unités de données de protocole, PDU, et/ou
- des trames.

4. Contrôleur de passerelle (100) selon l'une des revendications 1 et 3, les données dans le format de données uniforme déposées dans le ZIA (120) pouvant être invoquées et/ou traitées par le biais de tâches correspondantes, chaque tâche se composant d'une séquence d'expressions booléennes et mathématiques pour l'interrogation des données et/ou le traitement des données.

5. Contrôleur de passerelle (100) selon la revendication 4, le traitement par les tâches pouvant être effectué lors de la survenance d'au moins un événement pouvant être prédéterminé et/ou de manière cyclique et/ou en étant commandé en fonction du besoin.

6. Contrôleur de passerelle (100) selon l'une des revendications précédentes, l'au moins un module de communication (130, 132, 134, 136) comprenant :
- au moins un module Ethernet (130) servant à l'échange de données entre le ZIA (120) et un port Ethernet ; et/ou
- au moins un module FlexRay, FR, (132) servant à l'échange de données entre le ZIA (120) et au moins un port de bus FR (162) ; et/ou
- au moins un module de réseau de zone de contrôleur, CAN, (134) servant à l'échange de données entre le ZIA (120) et un ou plusieurs ports de bus CAN ; et/ou
- au moins un module de réseau d'interconnexion local, LIN, (136) servant à l'échange de données entre le ZIA (120) et un ou plusieurs ports de bus LIN.

7. Contrôleur de passerelle (100) selon l'une des revendications précédentes, comprenant en plus de cela :
au moins un support de stockage (170) ;
le ZKS comprenant en plus de cela :
- un module de journalisation (144) qui, en cas de survenance d'au moins un événement pouvant être prédéterminé et/ou de manière cyclique, peut transmettre au moins une partie des données du ZIA (120) dans le support de stockage (170) ; et/ou
- un module de traçage (142) qui, en cas de survenance d'au moins un événement pouvant être prédéterminé et/ou de manière cyclique, peut transmettre au moins une partie des données du ZIA (120) dans le support de stockage (170) et, en option, en plus des paramètres techniques de données ou de trames correspondantes ou associées de l'au moins un module de communication (130, 132, 134, 136) dans le support de stockage (170).

8. Procédé de gestion de données qui sont transmises par le biais d'un réseau de bord, comprenant :
le dépôt central de données, qui sont transmises par le biais du réseau de bord, dans un dépôt d'informations central, ZIA, (120) ;
la transmission de données entre le ZIA (120) et au moins un système de bus faisant partie du réseau de bord ayant lieu par le biais d'au moins un module de communication (130, 132, 134, 136) ;
**caractérisé en ce que** les données transmises par le biais du module de communication (130, 132, 134, 136) et converties en un format de données uniforme sont déposées dans le ZIA (120), un accès actif étant possible aux données déposées dans le format de données uniforme dans le ZIA (120) ainsi qu'aux données utiles présentes dans celles-ci et/ou les données utiles présentes dans les données pouvant être traitées.

9. Réseau de bord pour un véhicule, comprenant au moins un contrôleur de passerelle selon l'une des revendications 1 à 7.
